Europäisches Patentamt

European Patent Office

Office européen des brevets

(11) Publication number: **0 097 447**
A1

## EUROPEAN PATENT APPLICATION

(21) Application number: 83303271.7

(22) Date of filing: 07.06.83

(51) Int. Cl.³: **F 16 D 55/14**
F 16 D 65/54

(30) Priority: 12.06.82 GB 8217139

(43) Date of publication of application:
04.01.84 Bulletin 84/1

(84) Designated Contracting States:
DE FR IT

(71) Applicant: LUCAS INDUSTRIES public limited company
Great King Street
Birmingham, B19 2XF(GB)

(72) Inventor: Price, Anthony George
478 Gospel Lane
Acocks Green Birmingham B27 7AP(GB)

(74) Representative: Spall, Christopher John et al,
BARKER, BRETTELL & DUNCAN 138 Hagley Road
Edgbaston Birmingham B16 9PW(GB)

(54) Improvements in disc brakes for vehicles.

(57) In a disc brake the application of the brake is initiated by angular movement of at least one pressure plate with respect to reaction member to cause the pressure plate to move axially into engagement with a friction disc which, in turn, is urged into engagement with a surface in a stationary housing. The angular movement is effected hydraulically by an actuator comprising a piston (8) working in a bore (7) of a cylinder (5), the axis of which is substantially at right angles to that of the brake. The piston (8) acts on a thrust member (13) having a part-spherical inner surface (14), co-operating with a complementary surface on the inner end of an axially split collet (15) and the thrust member (13) is slidable in a transverse direction with respect to the piston (8). The collet (15) is associated with a pull-rod (23) passing through the actuator with a substantial clearance, the inner end of the pull-rod (21) being pivotally coupled to a lug on the pressure plates, and the outer end being adapted for connection to a hand lever (21) by means of which the pull-rod (23) can be moved in a brake-applying direction.

FIG.1

EP 0 097 447 A1

# IMPROVEMENTS IN DISC BRAKES FOR VEHICLES

This invention relates to improvements in disc brakes of the kind in which rotatable friction discs are adapted to be brought into engagement with opposed radial surfaces in a stationary housing by pressure plates located between the friction discs. Balls are located in co-operating oppositely inclined recesses in the adjacent faces of the pressure plates and the application of the brake is initiated by moving the pressure plates angularly in opposite directions, the pressure plates then moving apart into engagement with the friction discs which are urged into engagement with the radial surfaces in the housing. The pressure plates are carried round with the friction discs until one is arrested by the engagement of a lug on the plate with a stop abutment in the housing and the continued angular movement of the other pressure plate provides a servo action. The angular movement of the pressure plates to initiate the application of the brake is effected hydraulically by an actuator comprising a cylinder and piston assembly of which the axis is substantially at right angles to the axis of the brake and of which one component is fixed relative to the housing and the other is movable and acts through a part-spherical rocking thrust coupling associated with a pull-rod passing through the actuator with a substantial clearance, the inner end of the pull-rod being pivotally coupled to the junction of a pair of toggle links connected between lugs on the pressure plates, and the outer end of the pull-rod being extended for connection to a hand lever for applying the brake mechanically.

A brake of that kind is hereinafter referred to as a brake of the kind set forth and is particularly suitable for use in tractors and like vehicles.

A brake of the kind set forth is disclosed in our GB Patent Application No. 2 067 692 A and, in order to accommodate angular movement of the rod through the piston, which may be substantial, particularly when the distance from the connection with the transmission to the spherical coupling is substantial, in that application a thrust member is disposed between the movable component and the spherical rocking coupling, the thrust member being engageable with a thrust transmitting face on the movable component for sliding movement in the transverse direction with respect to the axis of the piston and cylinder assembly to accommodate angular movement of the pull-rod when the brake is applied. However, since the rod moves angularly when the brake is applied, in response to bodily angular movement of the toggle links with the pressure plates, such angular movement increases with wear of friction linings of the friction discs and the position of the centre of rotation along which the pull-rod is adapted to pivot will vary for a given wear condition, when the brake is applied mechanically. The total angular movement of the rod also depends upon the direction at which the mechanical brake-applying force is applied to it after separation of the rocking coupling. This means that the back-lash or lost-motion which has to be taken up before the brake can be applied, and which determines the braking clearance, is not constant. In consequence difficulty may arise should it be desired to incorporate in the brake an automatic slack adjuster which relies for its operation on sensing the brake clearance, since such an adjuster is likely to be unreliable in operation.

According to our invention in a disc brake of the kind set forth a thrust member disposed between the movable component and the spherical rocking coupling is engageable with a thrust transmitting face on the movable component for sliding movement in a transverse direction with respect to the axis of the piston and cylinder assembly, and the thrust member and the rod are permanently coupled together for relative movement both axially with respect to the longitudinal axis of the rod, and angularly about a centre of rotation lying on the transverse axis of the rod.

This ensures that the rod has a substantially constant centre of rotation unaffected by separation of the rocking coupling. Hence, for a given wear condition of linings, the back-lash or lost-motion will remain constant when the brake is applied mechanically. This makes it possible for us to incorporate in the brake an automatic slack adjuster which relies for its operation on sensing the braking clearance, and this forms another feature of our invention.

Preferably the thrust member and the rod are permanently coupled together by means of a shell which has a part-spherical portion in a rocking engagement with a complementary part-spherical portion on the thrust member, and a hollow axial extension projecting relatively away from the thrust member and in which the rod is slidably guided.

The thrust member may be urged towards the movable component by means of a compression spring acting on the shell.

The adjuster may be constituted by a collet which has a set of internal teeth and constitutes the spherical rocking coupling, and complementary teeth on the rod with which the internal teeth mesh and over which the internal teeth are adapted to ride to reduce the effective length of the pull-rod between the rocking coupling and the

4

toggle links and compensate for wear of the friction linings after movement of the collet with the rod has been arrested by the engagement of the collet with a stop abutment comprising the internal surface of the shell.

One embodiment of our invention is illustrated in the accompanying drawings in which:-

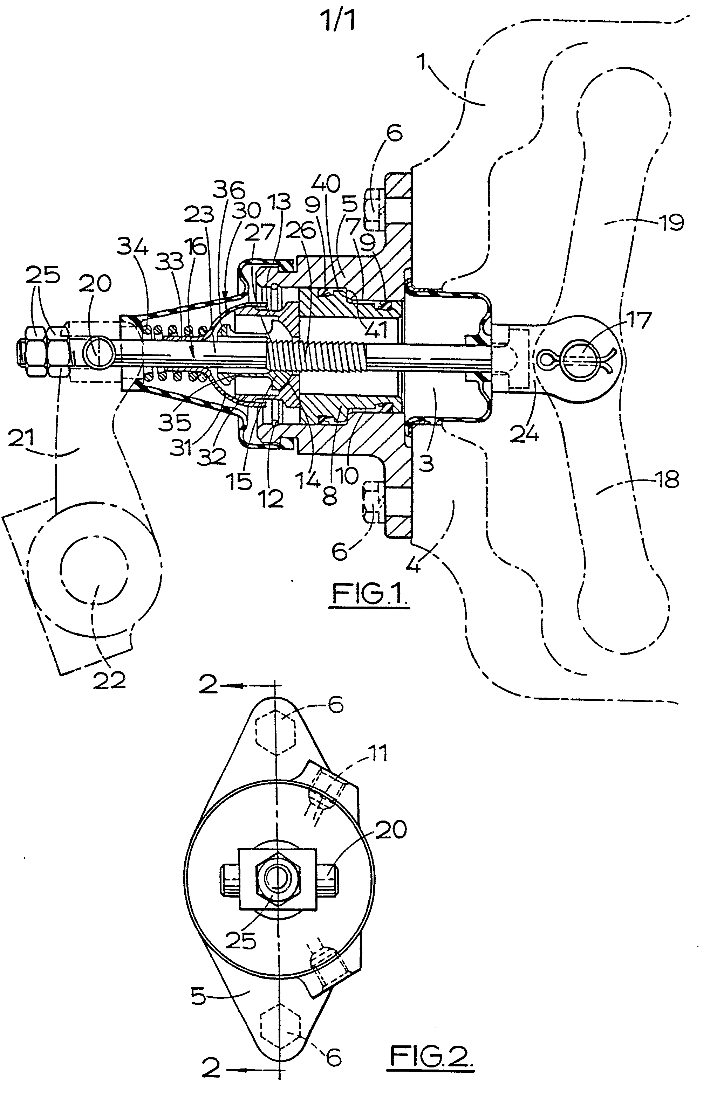

Figure 1 is an elevation of a brake-applying mechanism for a brake of the kind set forth, also showing adjacent parts of the brake;  and

Figure 2 is a section on the line 2-2 of Figure 1.

In the embodiment shown in the drawings the brake housing is indicated by the reference numeral 1.  The housing 1 is formed with an opening 3 in its periphery around which there is an annular flange 4 providing a seating for an hydraulic cylinder 5 which is secured to the housing by bolts 6 and is open at both ends.

The axis of the cylinder 5 is substantially at right angles to that of the brake.

The cylinder 5 has a stepped bore 7 in which works a hollow annular stepped piston 8 sealed by seals 9.  The working space of the cylinder is the annular space 10 around the piston 5 at the step in diameter and a connection 11 is made to this space from a master cylinder or other source of fluid under pressure. Outward movement of the piston is limited by a circlip 12 located in an annular groove in the cylinder wall adjacent to its open inner end.

Seating on the outer end of the piston is an annular thrust member 13 in the form of a stepped sleeve.  The member 13 has a part-spherical inner surface 14 co-operating with a complementary surface on the inner end of an axially split collet 15. The thrust member 13 is of a low-friction material and has a sliding engagement for radial movement with the outer end of the piston 8.

The collet 15 is associated with a force transmitting assembly 16 for transmitting a brake-applying force from the piston 8 to a pin 17 at the junction of opposed toggle levers 18, 19 of which the outer ends are connected to lugs on pressure plates of a brake of the self-energising spreading type, for example as illustrated in Figures 4 and 5 of the accompanying drawings of our GB Patent Application No. 2 067 692 A.

The force transmitting assembly 16 comprises a trunnion 20 coupled to a crank 21 which is rotatable about a transverse shaft 22 in response to operation of a brake-applying lever, and an inextensible rod 23 which extends through the collet 15 and is coupled at its inner end to a fitting 24 carrying the pin 17 and at its outer end to the trunnion 20 by means of nuts 25. An intermediate portion in the length of the rod 23 is provided with axially spaced teeth or serrations 26 which engage with complementary teeth or serrations 27 in the collet 15 and through which a brake-applying force is transmitted from the piston 8 to the toggle links 18, 19 through the rod 23.

The thrust transmitting member 13 and the rod 23 are permanently coupled together for relatively axial and angular movement by means of a shell 30. The shell 30 has a part-spherical portion 31 in rocking engagement with a complementary part-spherical portion 32 on the thrust transmitting member 13 which it receives to constitute a universal coupling, and a hollow axial extension 33 projecting towards the trunnion 20 and in which the rod 23 is axially slidable.

A compression spring 34 acts between the trunnion 20 and the shell 30 to urge the thrust-transmitting member 13 into engagement with the piston 8.

The collet 15 has an axial extension 35 which terminates in a part-spherical abutment nose 36. The nose 36 projects towards, and is spaced from, the interior of the portion 31 by a distance which determines the braking clearance. After this distance has been taken up the collet 15 and the rod 23 act to constitute an automatic slack adjuster in a manner hereinafter to be described.

In the inoperative retracted position shown in the drawings a shoulder 40 on the piston 8 at a step of the change in diameter engages with a complementary shoulder 41 in the cylinder 5.

When the brake is to be applied hydraulically for normal service braking hydraulic fluid under pressure is introduced into the annular space 10 to urge the piston 8 in an outwards direction with respect to the cylinder 5. This transmits a pull to the fitting 24 through the thrust transmitting member 13, the collet 15 and the rod 23 to urge the toggle levers 18 and 19 outwardly to apply the brake.

Circumferential movement of the pin 17 with the toggle levers 18 and 19 when the brake is applied is accommodated by the thrust member 13 sliding with respect to the outer end of the piston 8, with angular movement of the assembly 16 being accommodated by the collet 15 and the shell 30 rocking with respect to the thrust member 13.

When the brake is to be applied mechanically or manually, for parking or in an emergency, the crank 21 is moved angularly by the hand lever. This draws the rod 23 relatively from the housing 1 to withdraw the toggle levers 18 and 19 as described above. When this occurs, the rod 23 slides through the piston 8 and the extension 33 so that the piston 8 is unaffected, and carries with it the collet 15. During this movement the rod 23 moves angularly about an axis which coincides with the common axis of rotation between the shell 30 and the thrust member 13.

When the movement of the collet 15 with the rod 23 exceeds the spacing between the nose 36 and the shell 30, indicative that adjustment to compensate for wear of the linings is required, movement of the collet 15 with the rod 23 is arrested by the engagement of the nose 36 with the shell 30. Further movement of the rod 23 in the same direction withdraws the rod 23 through the collet 15 with the collet 15 expanding due to its split to ride over one or more teeth or serrations 26 on the rod 23. Upon release of the brake the rod 23 is returned towards its inoperative position with the final position determined by the re-engagement of the collet 15 with the thrust member 13 which, in turn, determines the newly adjusted braking clearance.

Automatic adjustment takes place therefore as a result of operation of the mechanical actuator and thus is entirely independent of hydraulic operation of the brake for normal service braking.

It may be necessary, periodically, to adjust the length of the force transmitting assembly 16 to ensure that the automatic adjustment can take place with the collet 15 in registry with the teeth or serrations 26. This is achieved by adjusting the nuts 25 manually to withdraw the rod 23 relatively from the housing 1.

## CLAIMS

1. A disc brake in which rotatable friction discs are adapted to be brought into engagement with opposed radial surfaces in a stationary housing (1) by pressure plates located between the friction discs, and balls are located in co-operating oppositely inclined recesses in the adjacent faces of the pressure plates, the application of the brake being initiated by moving the pressure plates angularly in opposite directions, the pressure plates then moving apart into engagement with the friction discs which are urged into engagement with the radial surfaces in the housing, and the pressure plates are carried round with the friction discs until one is arrested by the engagement of a lug on the plate with a stop abutment in the housing and the continued angular movement of the other pressure plate provides a servo action, the angular movement of the pressure plates to initiate the application of the brake being effected hydraulically by an actuator comprising a cylinder and piston assembly (5, 8) of which the axis is substantially at right angles to the axis of the brake and of which one component (5) is fixed relative to the housing (1) and the other is movable and acts through a part-spherical rocking thrust coupling (14, 15) associated with a pull-rod (23) passing through the actuator with a substantial clearance, the inner end of the pull-rod being pivotally coupled to the junction of a pair of toggle links (18, 19) connected between lugs on the pressure plates, and the outer end of the pull-rod being extended for connection to a hand lever (21) for applying the brake mechanically, characterised in that a thrust member (13) disposed between the movable component (8) and the spherical rocking coupling is engageable with a thrust transmitting face on the movable component for sliding movement in a transverse direction with respect to the axis of the piston and cylinder assembly, and the thrust member and the rod are permanently coupled together for relative movement both axially with respect to the longitudinal axis of the rod, and angularly about a centre of rotation lying on the transverse axis of the rod.

2. A disc brake according to claim 1, characterised in that the thrust member (13) and the rod (23) are permanently coupled together by means of a shell (30), and the shell (30) has a part-spherical portion (31) in a rocking engagement with a complementary part-spherical portion (32) on the thrust member (13), and a hollow axial extension (33) projecting relatively away from the thrust member and in which the rod is slidably guided.

3. A disc brake according to claim 2, characterised in that the thrust member (13) is urged towards the movable component (8) by means of a compression spring (34) acting on the shell (30).

4. A disc brake according to any preceding claim, characterised by incorporating an automatic slack adjuster (15, 26) in which the adjuster relies for its operation on sensing the braking clearance.

5. A disc brake according to claim 4, characterised in that the adjuster comprises a collet (15) which has a set of internal teeth (27) and constitutes the spherical rocking coupling, and complementary teeth (26) on the rod (23) with which the internal teeth mesh and over which the internal teeth are adapted to ride to reduce the effective length of the pull-rod (23) between the rocking coupling and the toggle links and compensate for wear of the friction linings after movement of the collet with the rod has been arrested by the engagement of the collet with a stop abutment comprising the internal surface of the shell (30).

FIG.1.

FIG.2.

# EUROPEAN SEARCH REPORT

European Patent Office

EP 83 30 3271

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A,D | GB-A-2 067 692 (LUCAS) <br> * Page 1, line 127 - page 2, line 4; figure 2 * | 1 | F 16 D 55/14 <br> F 16 D 65/54 |
| | --- | | |
| A | GB-A-1 277 345 (GIRLING) <br> * Page 2, lines 2-30; figure 1 * | 1 | |
| | --- | | |
| A | EP-A-0 016 549 (LAMBERT) | | |
| | --- | | |
| A | US-A-3 392 805 (KREITNER) | | |
| | --- | | |
| A | EP-A-0 040 574 (PAUMELLERIE) | | |
| | ----- | | |

**TECHNICAL FIELDS SEARCHED (Int. Cl. ³)**

F 16 D 55/14
F 16 D 55/16
F 16 D 55/18
F 16 D 55/46
F 16 D 65/54

The present search report has been drawn up for all claims

| Place of search <br> THE HAGUE | Date of completion of the search <br> 09-09-1983 | Examiner <br> HARTEVELD C.D.H. |
|---|---|---|